# FASCICULE DE BREVET EUROPEEN

(11) **EP 4 575 513 B1**
(45) Date de publication et mention de la délivrance du brevet: **02.12.2026**
(21) Numéro de dépôt: 24221400.5
(22) Date de dépôt: 19.12.2024
(51) Int. Cl.: G01P 5/08, G01F 1/58

(54) **TRANSDUCTEUR ÉLECTROMAGNÉTIQUE, DESTINÉ À LA MESURE DE VITESSES TRIDIMENSIONNELLES D'UN ÉCOULEMENT DE FLUIDE ÉLECTRIQUEMENT CONDUCTEUR**
ELEKTROMAGNETISCHER WANDLER ZUR MESSUNG DREIDIMENSIONALER GESCHWINDIGKEITEN EINES ELEKTRISCH LEITENDEN FLUIDSTROMS
ELECTROMAGNETIC TRANSDUCER FOR MEASURING THREE-DIMENSIONAL VELOCITIES OF AN ELECTRICALLY CONDUCTIVE FLUID FLOW

(30) Priorité: 19.12.2023 FR 2314455
(43) Date de publication de la demande: 25.06.2025
(73) Titulaire: Commissariat à l'Energie Atomique et aux Energies Alternatives, 75015 Paris (FR)
(72) Inventeur: REY, Frédéric, 13115 SAINT PAUL LEZ DURANCE (FR)
(74) Mandataire: Ipsilon

(56) Documents cités:
- DE-A1- 102006 018 623
- DE-A1- 102020 131 685
- FR-A- 1 391 344
- JP-A- S5 764 108

## Description

### Domaine technique

La présente invention concerne le domaine de l'instrumentation et de la mesure, et plus particulièrement celui des transducteurs dédiés à la vélocimétrie locale, ponctuelle, des fluides conducteurs de l'électricité en particulier dans le domaine de la vélocimétrie tridimensionnelle ponctuelle dans ces fluides.

L'invention porte sur un transducteur électromagnétique permettant de mesurer les composantes de vitesse d'un fluide conducteur électrique.

L'invention s'applique de manière générale à tout fluide conducteur de l'électricité. Ces fluides sont par exemple les solutions ioniques conductrices de l'électricité comme l'eau salée et plus encore les métaux liquides. Usuellement, ces métaux sont par exemple le sodium, le potassium, le plomb, le lithium, l'aluminium, le cuivre, le fer, le zinc, le titane et leurs alliages.

Plus particulièrement, l'invention s'applique à des mesures dans des fluides de type liquides denses ayant une masse volumique dans une plage de l'ordre de 100 kg.m⁻³ à plus de 10000kg.m⁻³.

L'invention est particulièrement adaptée pour des mesures de vitesses de fluides dont la gamme de températures de fusion est la plage des températures de fusion des métaux traités, mis en forme ou utilisés sous forme liquide, typiquement d'environ -50 °C à plus de 1500°C.

Une application avantageuse envisagée est la mesure de vitesses de caloporteurs, notamment des réacteurs nucléaires de fission et de fusion.

### Technique antérieure

Dans de nombreuses applications, il est nécessaire de connaître le champ de vitesse d'un fluide conducteur de l'électricité, en mouvement.

C'est le cas dans l'industrie de la fonderie métallique où la connaissance du champ des vitesses dans les moules de fonderies et leurs circuits d'alimentation permet de prévoir la qualité des pièces produites et limiter les rebus. La connaissance des vitesses d'écoulement permet en effet de contrôler et optimiser le remplissage des moules de fonderie.

Dans l'industrie nucléaire, le champ des vitesses des caloporteurs métalliques utilisés dans les circuits de certains réacteurs nucléaires est un facteur majeur dans la sollicitation des structures métalliques au contact. Aussi, sa connaissance est primordiale.

C'est également un facteur majeur des échanges thermiques existant dans les échangeurs de chaleur et au niveau du combustible nucléaire de ces réacteurs. La connaissance et l'analyse du champ des vitesses dans les endroits clés d'un réacteur (échangeurs de chaleur, sortie de cœur, pompe, etc..) est également un indicateur de bon fonctionnement et donc un moyen d'accroître la sûreté et globalement les possibilités de surveillance de ces machines.

Les expériences scientifiques mettant en œuvre des métaux liquides dans des volumes de grandes dimensions, les essais dans la perspective de connaître des distributions d'écoulement dans des collecteurs d'échangeurs, nécessitent également de connaître le champ des vitesses des écoulements en jeu.

Dans les différentes zones d'écoulement citées, les conditions d'écoulement sont tridimensionnelles. Ce qui caractérise aussi le plus souvent ces écoulements est leur niveau de température, le plus souvent de plusieurs centaines de degrés, et la masse volumique des fluides utilisés dont la gamme peut s'étendre de quelques centaines de kg.m⁻³ à plusieurs milliers de kg.m⁻³

Différentes techniques de vélocimétrie sont connues et utilisées pour mesurer les composantes de vitesse d'un écoulement de liquide conducteur de l'électricité.

Parmi celles-ci, les techniques électromagnétiques sont particulièrement pertinentes et robustes, en termes de tenue des matériaux, aux sollicitations qui lui sont appliquées par l'environnement dans lequel la mesure doit être réalisée. Ces techniques sont d'autant plus intéressantes s'il s'agit de fluides denses et chimiquement réactifs, comme les métaux liquides.

Le principe de fonctionnement des transducteurs électromagnétiques est illustré par l'expression de la loi d'Ohm dans le fluide en mouvement soumis à un champ magnétique. Elle montre que la conductivité *σ* du fluide entraîne le développement de courants (densité de courant électrique J) sous l'action de la vitesse de déplacement u conjuguée au champ magnétique externe B : [Equation 1] $\vec{{J}_{u}} = σ \left(\vec{E}+\vec{u}\times \vec{B}\right)$

Cela se produit même en l'absence de champ électrique E.

Les densités de courants *Jᵤ* sont source d'un champ magnétique *Bᵤ.* Ce champ *Bᵤ* déforme le champ externe B.

On précise ici que, par simplification, le vecteur symbolisé par la lettre B, qui est la densité de flux magnétique ou induction magnétique, est désignée dans l'ensemble de la demande sous l'appellation de champ magnétique. On précise également que les différentes formulations indiquées plus loin, sont écrites dans le cadre de l'approximation des régimes quasi-permanents, permettant de négliger certaines grandeurs intervenant dans les équations de Maxwell, comme les courants de déplacement.

A ce jour, les mesures d'une seule composante de vitesse d'un écoulement sont couramment réalisées par des transducteurs électromagnétiques, désignés couramment sous l'acronyme DDF pour « Débitmètre à Distorsion de Flux », ou celui anglo-saxon ECFM (« Eddy Current Flow Meter ») ou encore PSFM (« Phase Shift Flow Meter »).

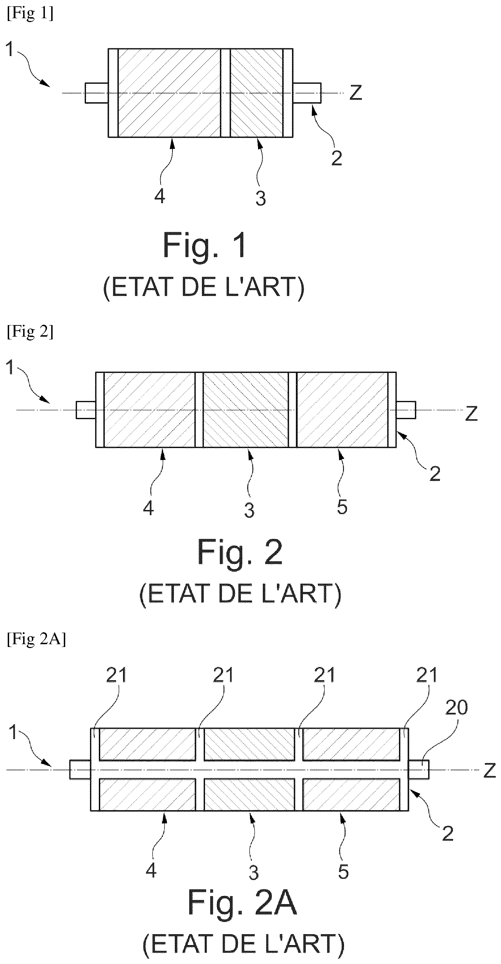

Un DDF classique, globalement désigné par la référence 1 est montré aux figures 1, 2 et 2A : il est axisymétrique d'axe central X et typiquement constitué d'un noyau 2, d'une bobine électrique émettrice, dite primaire 3, et d'une ou de deux bobines électriques réceptrices, dites secondaires 4, 5. Le noyau 2 est formé d'une tige pleine 20 s'étendant selon l'axe central X et de disques pleins 21 régulièrement espacés selon l'axe central (X), la tige pleine reliant les disques pleins entre eux. Les bobines primaire 3 et secondaires 4, 5 sont enroulées autour de la tige pleine 20 entre deux des disques pleins 21.

Un courant électrique est imposé dans la bobine primaire. La circulation de ce courant crée un champ magnétique externe B dans l'environnement proche de la bobine primaire, selon l'équation de Maxwell - Ampère : [Equation 2] $\vec{∇} \times \vec{B} = μ . \vec{J}$ avec :
*̅∇̅*̅ : opérateur différentiel
*µ* : perméabilité magnétique avec *µ* = *µᵣµ*₀
*µ*₀ : perméabilité magnétique du vide
*B* : traverse les bobines réceptrices.

Le courant primaire est alternatif, de manière à ce que B soit alternatif également. De la sorte B induit une tension électrique dans chacune des bobines réceptrices, selon l'équation de Maxwell - Faraday : [Equation 3] $\vec{∇} \times \vec{E} = - \frac{\partial \vec{B}}{\partial t}$ avec :
*̅E̅*̅ : champ électrique.

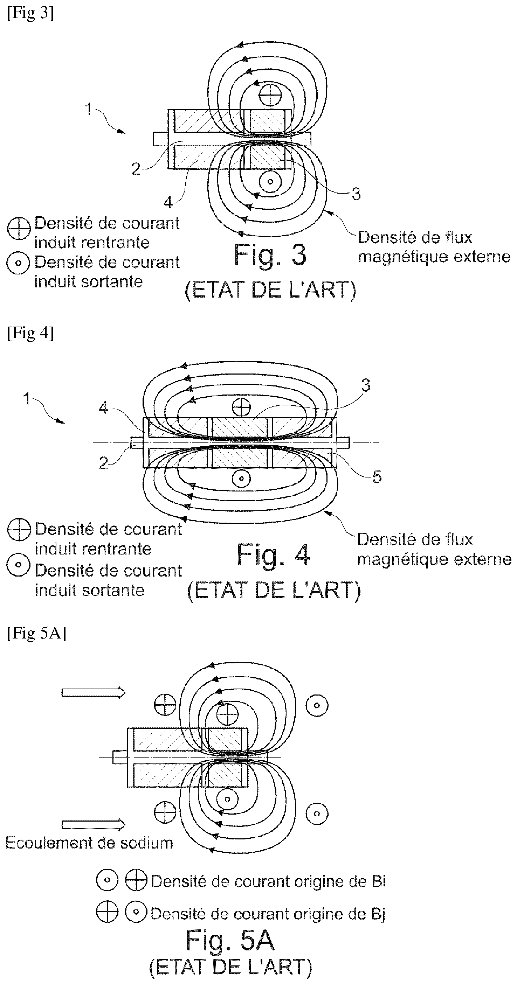

Par ailleurs, B entraine aussi le développement de densités de courants induites Jᵢ dans le fluide, ainsi que dans tout conducteur électrique environnant soumis à ce champ magnétique, dont le métal des tubes. Les figures 3 et 4 montrent le développement de densités de courants induits sous l'action du champ magnétique externe, en l'absence de vitesse d'écoulement, pour un DDF, respectivement à une bobine secondaire 4, et à deux bobines secondaires 4, 5.

Les densités de courant Ji créent à leur tour un champ magnétique Bi déformant le champ externe B. Ainsi, le champ B n'est pas le même suivant que le DDF est entouré d'un fluide conducteur de l'électricité ou non.

En l'absence de mouvement de fluide, la ou les bobines réceptrices délivrent des tensions électriques qui sont des fonctions du champ magnétique externe B et du champ Bi.

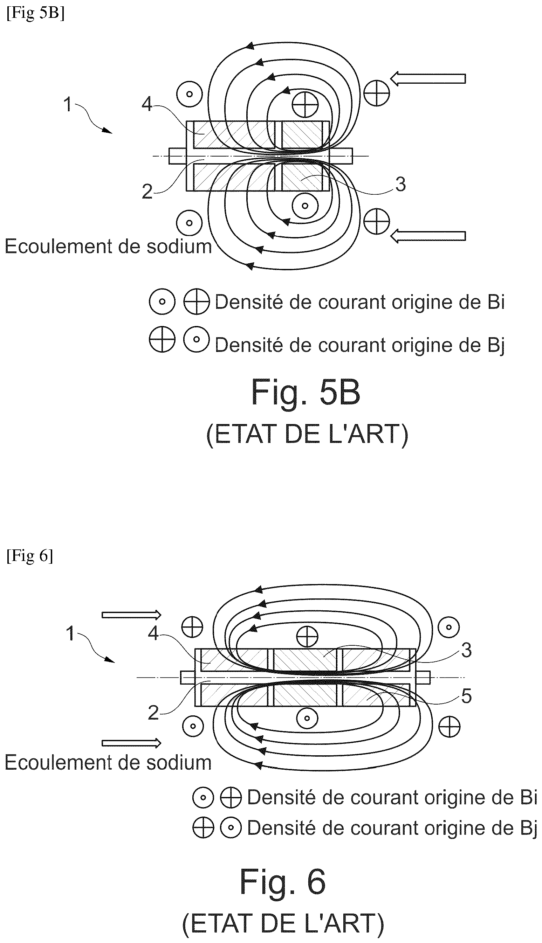

En présence d'un mouvement de fluide, de nouvelles densités de courant Ju apparaissent et sont source d'un champ magnétique Bu. Ce nouveau champ modifie B, qui est en quelque sorte soufflé par l'écoulement de fluide conducteur et se déforme dans le sens de l'écoulement de celui-ci, comme illustré aux figures 5A, 5B et 6.

Le flux magnétique passant à travers la ou les bobines réceptrices dépend de la vitesse d'écoulement.

La ou les bobines réceptrices délivrent donc des tensions électriques traduisant l'influence des champs magnétiques *Bᵢ* et *Bᵤ* qui déforment le champ externe *B.*

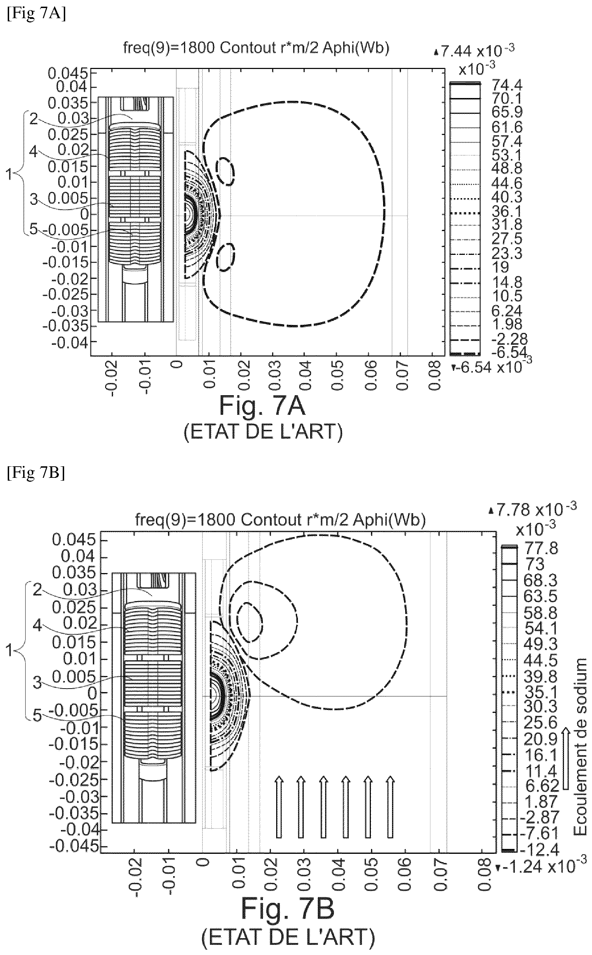

Des simulations numériques illustrent cela. Les figures 7A et 7B sont des simulations numériques du champ magnétique autour d'un DDF respectivement en l'absence et en présence de vitesse d'écoulement de fluide conducteur de l'électricité.

L'analyse des tensions électriques délivrées par les bobines réceptrices permet de déterminer la vitesse d'écoulement du fluide en mouvement dans la zone d' action du champ magnétique B.

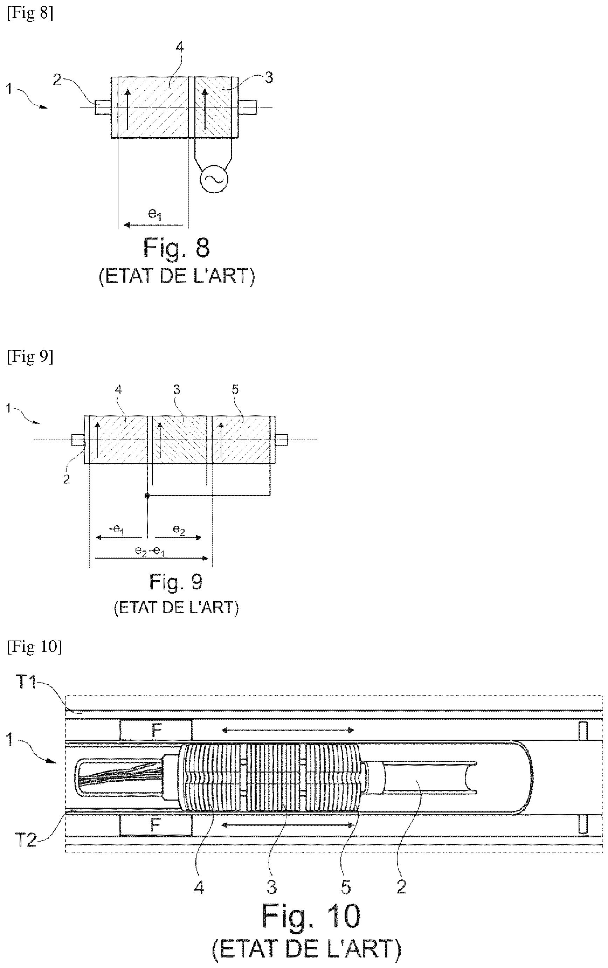

Comme montré à la figure 8, si la bobine réceptrice unique 4 d'un DDF 1 est en amont par rapport au sens de l'écoulement de fluide, elle voit une baisse de flux magnétique quand la vitesse augmente (et inversement). La tension *e₁* qu'elle délivre décroît de *Δe₁.*

La tension *e₁* fournie par le DDF est l'image de la vitesse d'écoulement (avec indication du sens relativement grâce à la comparaison de l'amplitude du signal courant avec l'amplitude du signal sans vitesse).

En plus de cela, dans le cas d'un DDF à deux bobines réceptrices, la bobine réceptrice aval voit une augmentation du flux qui la traverse alors que la vitesse de fluide augmente. Sa tension *e₂* croît de *Δe*₂.

On a |*Δe*₂ |= |*Δe₁*|
Généralement, les deux bobines réceptrices 4, 5 d'un DDF sont électriquement couplées en anti-série, comme montré à la figure 9.

De cette manière, le signal V fourni par le DDF à deux bobines est donné par : $V = \left|{e}_{2}\right| - \left|{e}_{1}\right|$ avec |*eₓ*| : module ou amplitude de la tension *eₓ.*

Le signal V est proportionnel à la composante de vitesse de l'écoulement projetée sur l'axe de révolution du DDF.

En pratique, on privilégie le DDF à deux bobines réceptrices, car l'utilisation combinée des tensions délivrées par ces deux bobines permet de doubler la sensibilité et supprimer la dépendance de la réponse du DDF à des grandeurs non pertinentes comme la température : $V = \left(\left|{e}_{2}\right|-\left|{e}_{1}\right|\right) / \left(\left|{e}_{2}\right|+\left|{e}_{1}\right|\right)$

Le signe de V donne le sens de la vitesse sans nécessité de comparaison avec l'amplitude du signal sans vitesse d'écoulement.

En ce qui concerne l'agencement des DDF relativement à l'écoulement de fluide, ils peuvent être internes à l'écoulement, c'est-à-dire positionnés sur l'axe d'un tube au milieu de l'écoulement à caractériser : [1]. Un DDF est ainsi au sein de l'écoulement de fluide, celui-ci étant périphérique au DDF.

En pratique, comme montré à la figure 10, un DDF interne 1 est généralement placé au centre d'un espace annulaire, délimité par deux tubes concentriques T1, T2, dans lequel s'écoule le fluide F dont on cherche à mesurer les vitesses.

D'autres DDF peuvent être externes à l'écoulement. Les bobines et le noyau des DDF externes sont ainsi disposés autour de l'écoulement de fluide pour lequel on souhaite mesurer les vitesses.

En pratique, un DDF externe est placé autour d'un tube pour mesurer la vitesse du fluide qui s'écoule dans ce tube : [2].

Quand les DDF sont utilisés pour évaluer la vitesse d'un fluide circulant dans un tube, qu'ils soient internes ou externes à ce dernier, ils ne peuvent mesurer qu'une composante de vitesse qui est celle selon l'axe du tube et donc selon leur axe d'axisymétrie X. En effet, le tube guide l'écoulement du fluide et lui donne sa direction principale.

De manière générale, un DDF classique placé dans un milieu ouvert, c'est-à-dire dans un grand volume de fluide conducteur de l'électricité en mouvement, i.e. dans un volume dont les frontières sont suffisamment éloignées du DDF pour qu'elles n'orientent pas le vecteur vitesse de l'écoulement au niveau du DDF, on constate que les DDF ne peuvent rendre compte que d'une seule composante de vitesse de l'écoulement qui est celle projetée le long de l'axe d'axisymétrie du DDF. Cela est dû à la constitution axisymétrique d'un DDF.

Par conséquent, il n'est pas probant d'utiliser des DDF classiques en milieu ouvert pour caractériser plusieurs composantes de vitesse au lieu d'implantation du DDF. En particulier, la mesure de vitesse des fluides conducteurs de l'électricité, denses, dans les milieux ouverts est un problème en soit.

La modélisation et les simulations d'un DDF selon l'état de l'art, en milieu ouvert, soumis à différentes vitesses de composantes tridimensionnelles, prouvent cela.

Les inventeurs ont modélisé un DDF selon l'état de l'art et son fonctionnement a été simulé pour différentes sollicitations de vitesse environnante de l'écoulement d'un métal liquide (sodium) en mouvement. Le repère orthonormé d'analyse dans lesquels sont exprimées les vitesses est x,y,z.

Les figures 11 et 11A illustrent, pour ce DDF selon l'état de l'art soumis à une vitesse de composante x, la densité de flux magnétique, le vecteur vitesse, la coupe de normale y et la coupe de normale.

Les figures 12 et 12A illustrent, pour ce même DDF selon l'état de l'art soumis à une vitesse de composante y, la densité de flux magnétique, le vecteur vitesse, la coupe de normale x et la coupe de normale z.

On constate donc que, soumis à un champ des vitesses de composante selon x, un DDF selon l'état de l'art fournit le même signal de réponse que lorsqu'il est soumis à un champ de vitesse de composante unique y.

En conclusion, les DDF selon l'état de l'art, internes ou externes ne peuvent pas être utilisés pour mesurer en un lieu ponctuel donné, simultanément, plusieurs composantes de la vitesse d'écoulement multidimensionnel d'un fluide.

L'utilisation simultanée de plusieurs DDF, un par composante de vitesse, par exemple positionnés et orientés de manière à former un repère orthonormé direct ou tout autre arrangement, n'est pas possible non plus en raison de l'interaction entre eux des champs magnétiques des différents DDF placés à proximité les uns des autres.

Par ailleurs, il est connu des transducteurs capables de réaliser une mesure, quasiment en un point, de plusieurs composantes de vitesses d'un écoulement de fluide: [3], [4], [5].

Parmi ceux-ci, on peut citer les sondes à fils ou à films chauds pour les mesures aérodynamiques. Ces sondes sont fragiles et donc limitées à un emploi pour des vitesses de quelques millimètres par seconde au mieux.

Les sondes à potentiel permettent des mesures de vitesses locales, potentiellement sur plusieurs composantes de vitesse. Cependant, leur fonctionnement repose sur un contact électrique entre leurs électrodes et le fluide à caractériser. Aussi, elles sont fortement sensibles à l'oxydation, notamment dans les métaux liquides. Il est aussi nécessaire d'avoir une isolation électrique entre les électrodes et la structure métallique de la sonde pour un emploi avec des métaux liquides. Cela en restreint l'emploi à des domaines de température de fluide plus basse, que les technologies électromagnétiques de mesure sans contact.

Ainsi, il n'existe pas de transducteurs de mesure, capables d'évaluer plusieurs composantes de vitesses d'écoulement de fluides conducteurs de l'électricité, qui peuvent être denses, pour une gamme de vitesses élevées et/ou à des températures élevées.

Des méthodes de tomographie par induction sans contact ont déjà été testées pour la mesure de vitesses d'écoulement de fluide multidimensionnel.

La publication [6] décrit une telle méthode : celle-ci n'est capable de mesurer en l'état que deux composantes de vitesse en des points d'un plan radial du fluide. La capacité à mesurer trois composantes de vitesse n'est pas démontrée.

Le brevet EP1285277B1 décrit également une méthode de tomographie par induction sans contact.

La principale contrainte à laquelle sont confrontées les méthodes de tomographie par induction sans contact est que le champ magnétique utile à observer est de l'ordre de 2 à 5 ordres de grandeur inférieur à celui du champ magnétique qu'il est nécessaire d'appliquer.

Par ailleurs, ces méthodes nécessitent également de travailler sur des volumes de fluide relativement limités en dimensions, typiquement de l'ordre de 1 m, de sorte que le champ magnétique externe puisse se propager dans l'ensemble du volume à caractériser.

De plus, ces méthodes nécessitent des algorithmes de traitement qui sont complexes.

Le champ magnétique externe doit aussi franchir le matériau des parois contenant le fluide en mouvement car le matériel mettant en œuvre la méthode de mesure est placé à l'extérieur. Les performances de la méthode dépendent donc de la nature du matériau des parois, de son épaisseur et aussi de la géométrie d'ensemble du tomographe.

En résumé, les DDF selon l'état de l'art sont inaptes à mesurer plusieurs composantes de vitesse simultanément. Ils ne peuvent pas être associés entre eux, à proximité les uns des autres, pour mesurer en un lieu donné plusieurs composantes de vitesse du fait des perturbations qu'ils se transmettent les uns aux autres.

Les transducteurs de mesure existants ne sont pas capables d'évaluer plusieurs composantes de vitesses d'écoulement de fluides conducteurs de l'électricité, qui peuvent être denses, pour une gamme de vitesses élevées et/ou à des températures élevées.

Les méthodes de mesures tridimensionnelles d'écoulement par tomographie sans contact sont globales. Elles mettent en œuvre des matériels disposés hors du volume fluide à caractériser. Leurs performances sont dépendantes des structures contenant le volume de fluide. Le traitement de leurs signaux est complexe. La taille du volume de fluide qu'elles peuvent caractériser doit être limitée. Ainsi, elles ne peuvent pas être mises en œuvre dans un volume important, tel que l'intérieur d'une cuve d'un réacteur nucléaire refroidi au sodium.

Le brevet JPS5764108 divulgue un équipement de mesure de type à courants de Foucault pour détecter des débits de fluide et leurs températures, avec une bobine d'excitation par détection de courants de Foucault, excitée de manière multiplexée en même temps par deux signaux, un signal de référence et un autre signal de référence qui diffère de 90 degrés en phase ; une tension induite correspondant au flux excité au niveau des bobines de détection situées respectivement du côté du courant supérieur et en aval de la bobine d'excitation, étant traitée au niveau d'un additionneur et d'un soustracteur, et la sortie de l'additionneur étant traitée de manière multiplexée.

Il existe donc un besoin de proposer une solution de mesures tridimensionnelles de vitesses d'écoulement de fluides conducteurs de l'électricité, qui peuvent être denses, pour une gamme de vitesses élevées et/ou à des températures élevées et ce, même dans des volumes importants.

Le but de l'invention est de répondre au moins en partie à ce besoin.

### Exposé de l'invention

Pour ce faire, l'invention a pour objet, selon une première alternative, un transducteur électromagnétique, destiné à mesurer les composantes tridimensionnelles de vitesse d'un écoulement d'un fluide électriquement conducteur, comprenant :
- un tube cylindrique métallique formant un noyau à haute perméabilité magnétique, qui s'étend selon un axe central (Z), comprenant une portion centrale et deux portions d'extrémité, de part et d'autre de la portion centrale, comprenant chacune un nombre de trois bossages, agencés à 120 ° les uns des autres autour de l'axe central (Z) et délimitant chacun une surface plane, parallèle à l'axe central (Z),
- une bobine électrique, dite bobine primaire, enroulée autour de la portion centrale du tube,
- un nombre de six bobines électriques, dite bobines réceptrices, enroulées chacune autour d'une des surfaces planes ou de six capteurs à effet hall, agencés chacun sur une des surfaces planes.

Selon une deuxième alternative, l'invention a pour objet un transducteur électromagnétique, destiné à mesurer les composantes tridimensionnelles de vitesse d'un écoulement d'un fluide électriquement conducteur, comprenant :
- un tube cylindrique métallique formant un noyau à haute perméabilité magnétique, qui s'étend selon un axe central (Z), comprenant une portion centrale et deux portions d'extrémité, de part et d'autre de la portion centrale, comprenant chacune un nombre de trois bossages, agencés à 120 ° les uns des autres autour de l'axe central (Z) et délimitant chacun une surface plane, parallèle à l'axe central (Z),
- un aimant permanent agencé autour de la portion centrale du tube,
- un nombre de six bobines électriques, dite bobines réceptrices, enroulées chacune autour d'une des surfaces planes ou de six capteurs à effet hall, agencés chacun sur une des surfaces planes.

De préférence, le noyau est à faible conductivité électrique pour limiter les pertes induites par l'induction magnétique variable, à savoir les pertes joules liées à la circulation du courant induit et les pertes par hystérésis.

Ainsi, l'invention consiste essentiellement en un transducteur électromagnétique que l'on peut faire fonctionner en courant alternatif (première variante) ou en courant continu (deuxième variante) pour la mesure sans contact de trois composantes tridimensionnelles d'un fluide électriquement conducteur.

L'agencement judicieux des bobines réceptrices ou capteurs à effet Hall à 120° les uns par rapport aux autres permet de mesurer par distorsion de flux électromagnétique, la contribution de chacune des composantes du vecteur de vitesse local sans perturbation par les autres contributions.

Un transducteur électromagnétique à distorsion de flux selon l'invention permet de mesurer des vitesses de quelques millimètres par seconde à plusieurs mètres par seconde.

En outre, il est adapté pour la mesure de vitesses de liquides électriquement conducteurs, qui sont denses, typiquement de densité de l'ordre de 100 à plus de 10 000 kg.m⁻³, et/ou qui sont à haute température, typiquement dans la plage des températures de fusion des métaux traités, mis en forme ou utilisés sous forme liquide.

Au final, un transducteur électromagnétique selon l'invention proposée permet de dépasser les limitations identifiées des dispositifs de l'art antérieur et présente de nombreux avantages parmi lesquels :
- la possibilité de mesure simultanée des trois composantes de vitesse d'un écoulement de fluide conducteur de l'électricité dans le volume de fluide qui est à sa proximité immédiate ;
- aucune nécessité de l'associer à d'autres transducteurs du même type au risque de rendre ses mesures inopérantes, comme c'est le cas avec un DDF selon l'état de l'art ;
- la possibilité d'un positionnement au sein de l'écoulement à caractériser dans la zone à étudier ;
- la caractérisation des composantes de vitesse de l'écoulement, même dans des volumes de fluide très importants;
- un traitement des signaux qu'il produit, nettement moins complexe que les algorithmes de reconstruction nécessaires aux méthodes de mesure tomographiques.

L'invention a également pour objet l'utilisation d'un transducteur électromagnétique tel que décrit précédemment pour la mesure des composantes tridimensionnelles de vitesse d'un écoulement d'un fluide électriquement conducteur, tel qu'un métal liquide de réacteur nucléaire.

D'autre avantages et caractéristiques ressortiront mieux à la lecture de la description détaillée, faite à titre illustratif et non limitatif, en référence aux figures suivantes.

### Brève description des dessins

[Fig 1] la figure 1 est une vue schématique de côté d'un Débitmètre à Distorsion de Flux (DDF) selon l'état de l'art, à une bobine réceptrice (secondaire).
[Fig 2] la figure 2 est une vue schématique de côté d'un DDF selon l'état de l'art, à deux bobines réceptrices (secondaires).
[Fig 2A] la figure 2A est une vue en coupe longitudinale de la figure 2.
[Fig 3] la figure 3 reprend la figure 1 et illustre le développement de densités de courants induits sous l'action du champ magnétique externe en l'absence de vitesse d'écoulement.
[Fig 4] la figure 4 reprend la figure 2 et illustre le développement de densités de courants induits sous l'action du champ magnétique externe en l'absence de vitesse d'écoulement.
[Fig 5A], [Fig 5B] les figures 5A et 5B reprennent la figure 1et illustrent le développement de densités de courants induits sous l'action du champ magnétique externe en présence d'une vitesse d'écoulement.
[Fig 6] la figure 6 reprend la figure 2 et illustre le développement de densités de courants induits sous l'action du champ magnétique externe en présence d'une vitesse d'écoulement.
[Fig 7A], [Fig 7B] les figures 7A et 7B sont des représentations de simulations numériques du champ magnétique autour d'un DDF selon l'état de l'art, respectivement en l'absence et en présence, de vitesse d'écoulement de fluide conducteur de l'électricité.
[Fig 8] la figure 8 reprend la figure 1 et illustre la tension électrique aux bornes de la bobine réceptrice du DDF selon l'état de l'art.
[Fig 9] la figure 9 reprend la figure 2 et illustre un couplage électrique préférentiel des bobines réceptrices en anti-série ainsi que les tensions électriques aux bornes des bobines et la tension finale relevée aux bornes du DDF selon l'état de l'art.
[Fig 10] la figure 10 est une reproduction reprographique d'un DDF selon l'état de l'art tel qu'agencé en interne dans un tube d'implantation pour la mesure d'une vitesse monodimensionnelle d'un fluide F en écoulement.

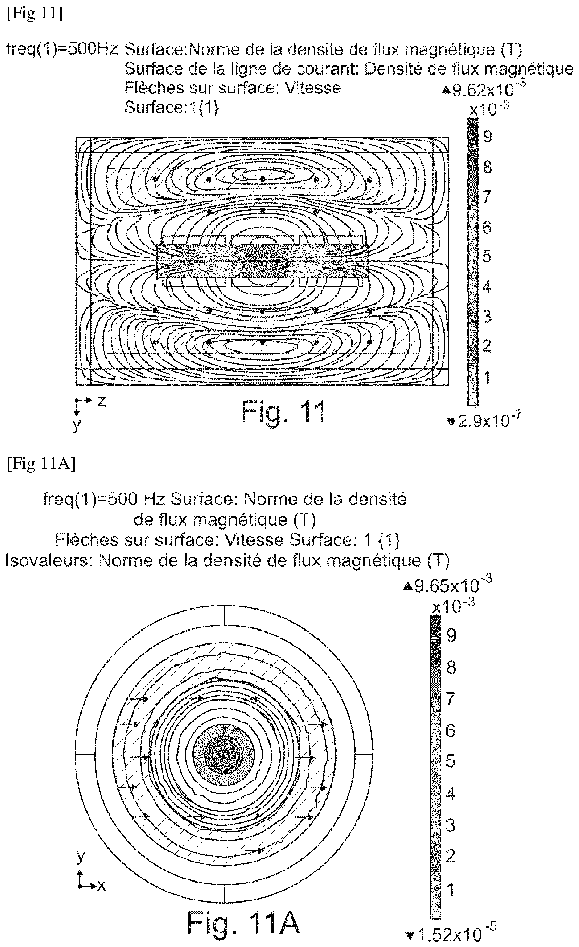

[Fig 11], [Fig 11A] les figures 11 et 11A sont des représentations de simulations numériques, pour un DDF selon l'état de l'art soumis à une vitesse de composante X, de sa densité de flux magnétique, de son vecteur vitesse, respectivement en coupe de normale Y et de normale Z.

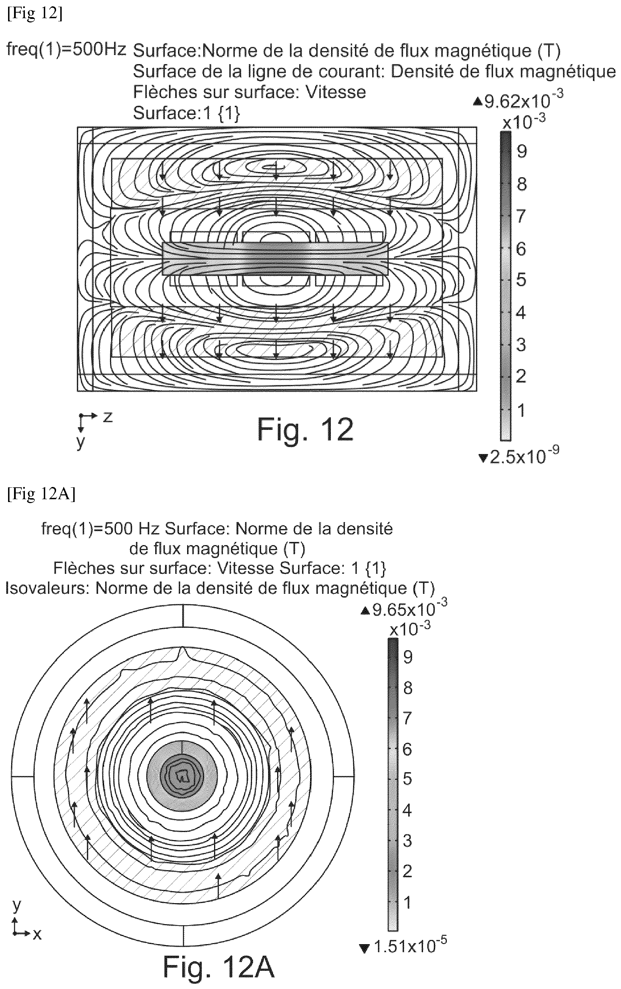

[Fig 12], [Fig 12A] les figures 12 et 12A sont des représentations de simulations numériques, pour un DDF selon l'état de l'art soumis à une vitesse de composante Y, de sa densité de flux magnétique, de son vecteur vitesse, respectivement en coupe de normale X et de normale Z.

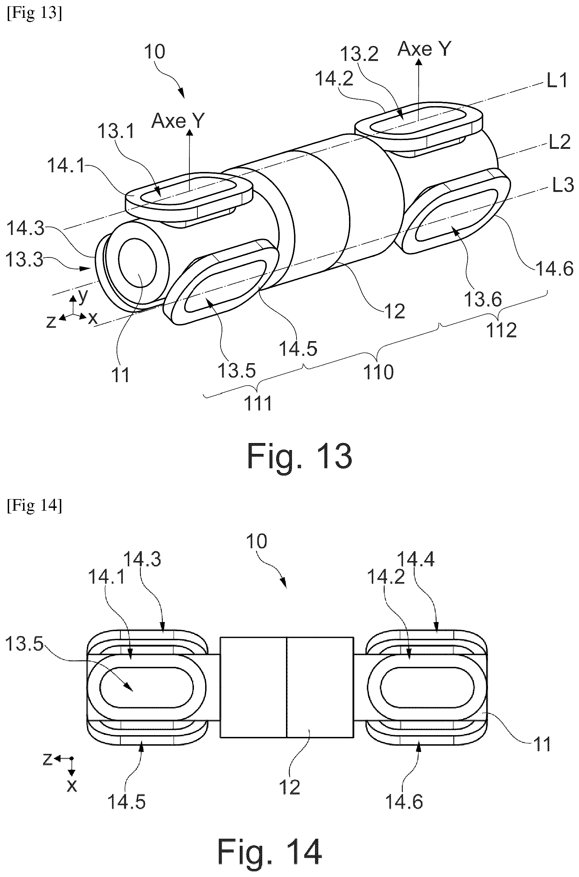

[Fig 13] la figure 13 est une vue schématique en perspective d'un transducteur électromagnétique selon une alternative de l'invention à fonctionnement à courant alternatif et à bobines réceptrices.
[Fig 14] la figure 14 est une vue de côté selon l'axe X du transducteur électromagnétique selon la figure 13.

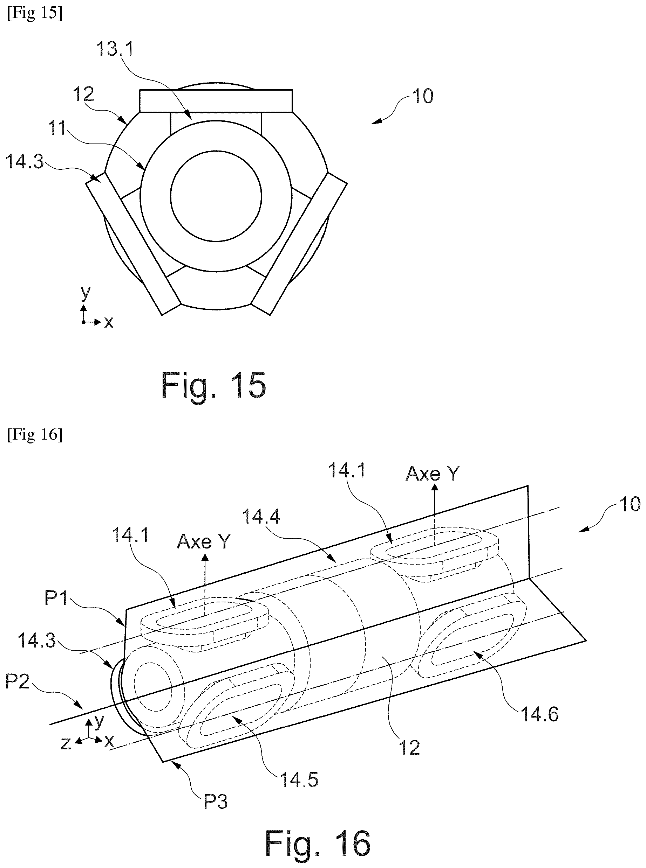

[Fig 15] la figure 15 est une vue de face selon l'axe Z du transducteur électromagnétique selon la figure 13.
[Fig 16] la figure 16 reprend le transducteur électromagnétique selon la figure 13, en montrant les lignes et plans de mesures.

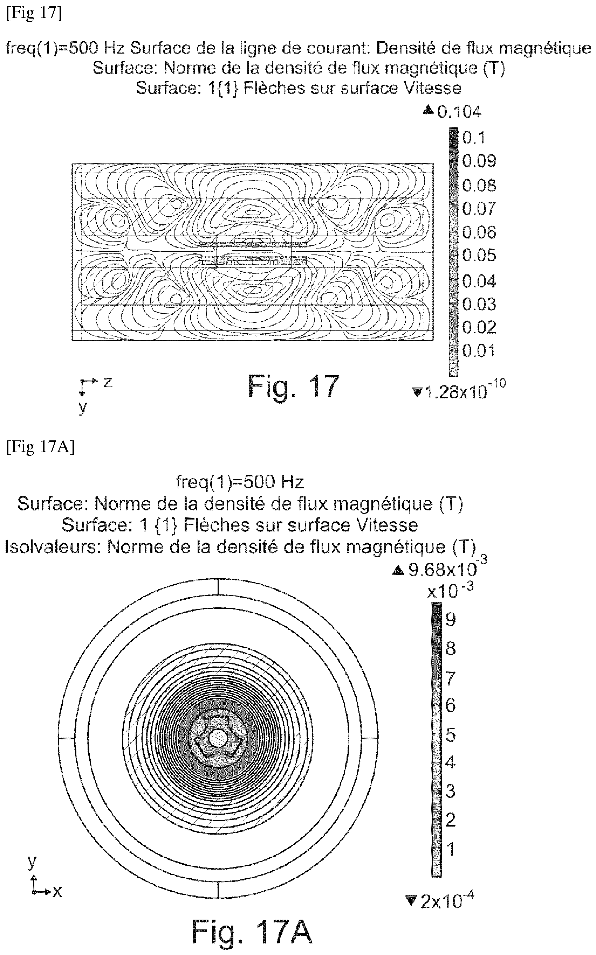

[Fig 17], [Fig 17A] les figures 17 et 17A sont des représentations de simulations numériques du transducteur électromagnétique selon la figure 13 en présence d'un fluide électriquement conducteur sans mouvement.

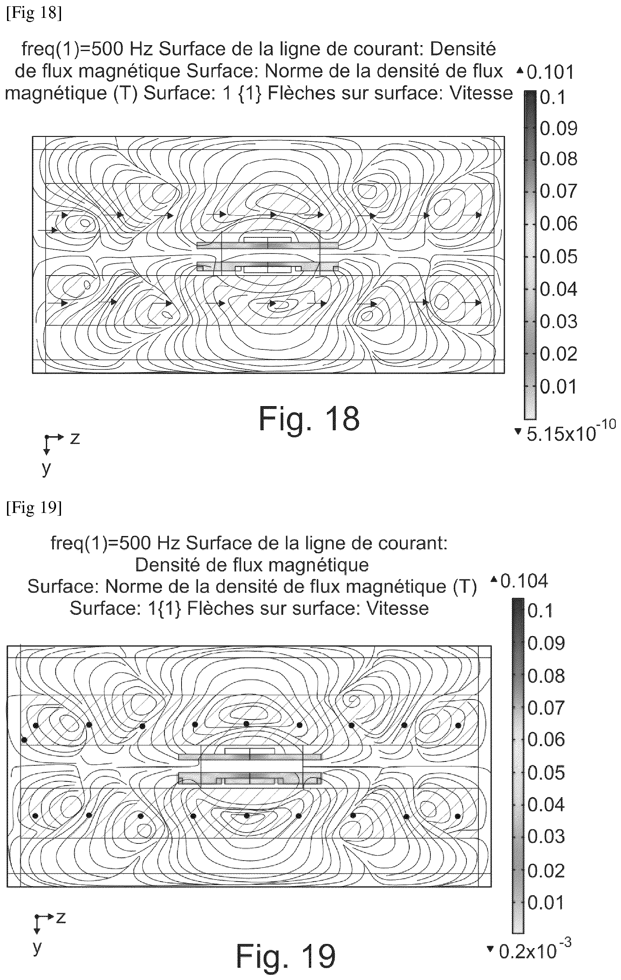

[Fig 18] la figure 18 est une représentation de simulation numérique d'un transducteur électromagnétique selon la figure 13 soumis à une vitesse de composante Z.

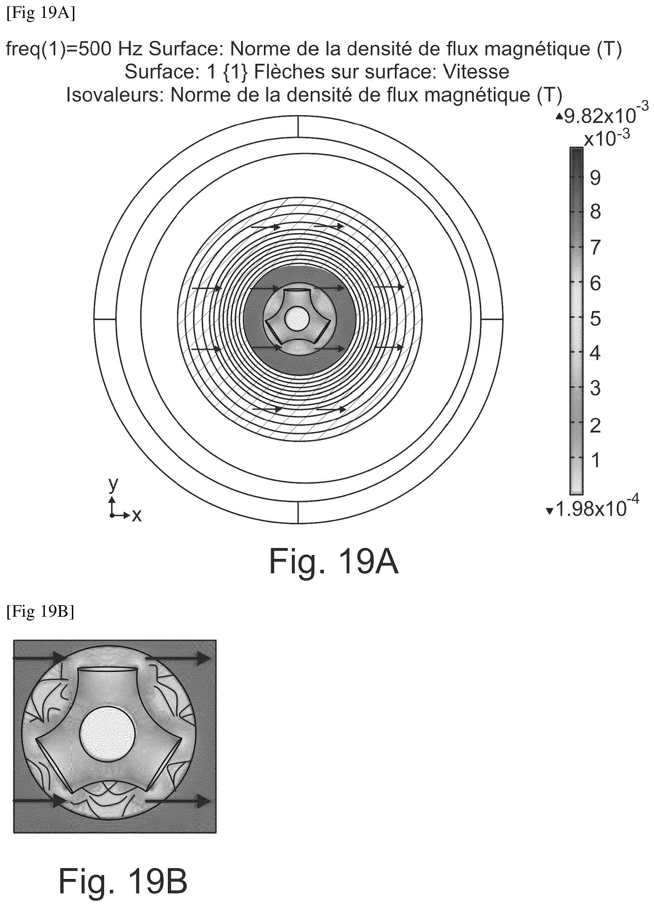

[Fig 19], [Fig 19A], [Fig 19B] les figures 19, 19A et 19B sont des représentations de simulations numériques d'un transducteur électromagnétique selon la figure 13 soumis à une vitesse de composante X.

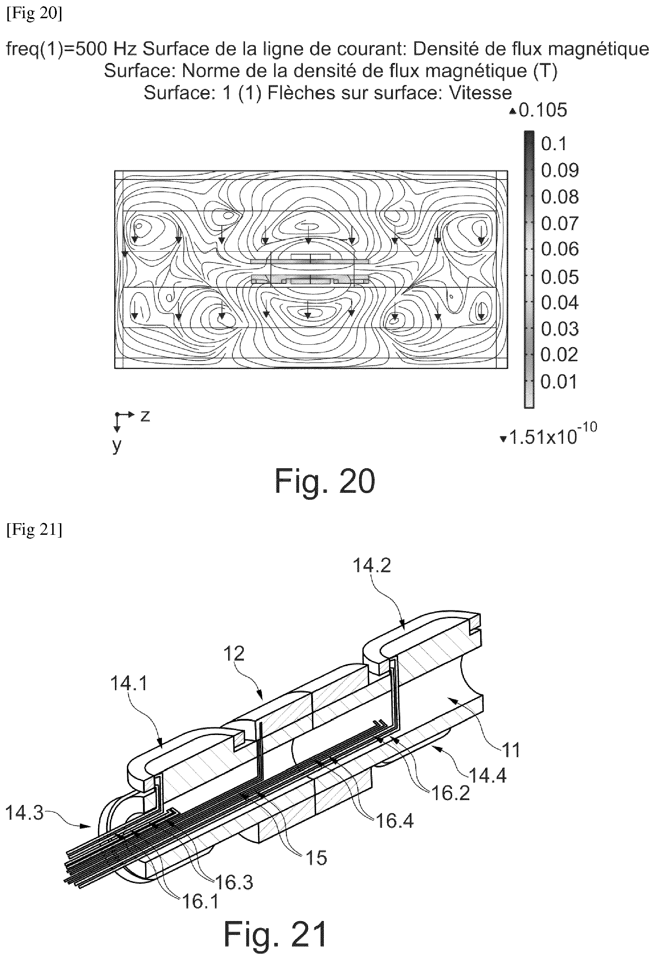

[Fig 20] la figure 20 est une représentation de simulation numérique d'un transducteur électromagnétique selon la figure 13 soumis à une vitesse de composante Y.
[Fig 21] la figure 21 est une vue schématique en perspective et en coupe longitudinale d'un transducteur électromagnétique selon la figure 13 montrant l'agencement des fils de raccordement électrique aux bobines primaire et secondaire.

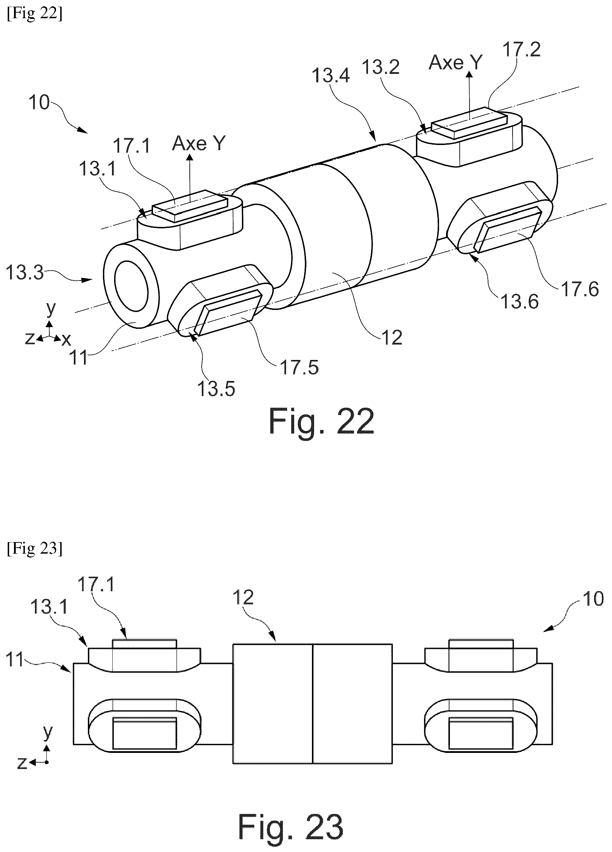

[Fig 22] la figure 22 est une vue schématique en perspective d'un transducteur électromagnétique selon l'invention à capteurs à effet Hall.
[Fig 23] la figure 23 est une vue de côté selon l'axe X du transducteur électromagnétique selon la figure 22.

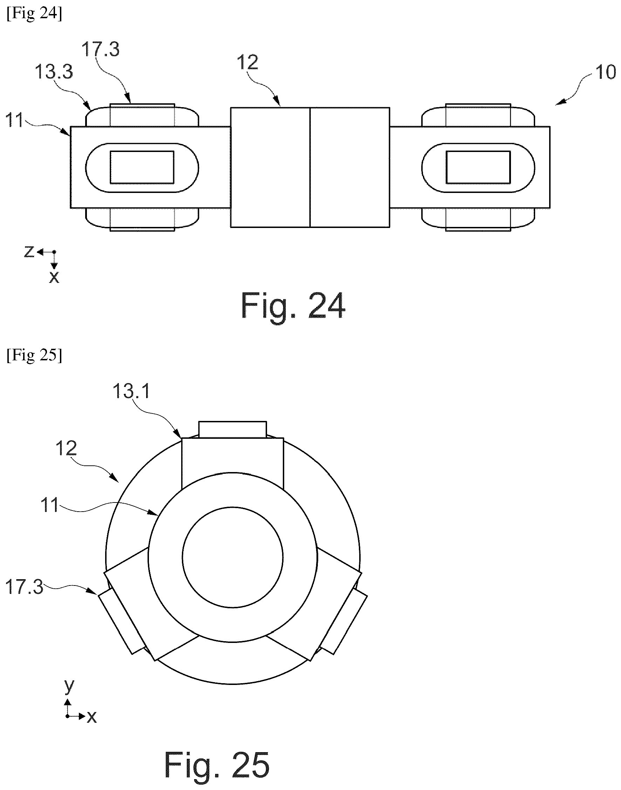

[Fig 24] la figure 2 est une vue de côté selon l'axe Y du transducteur électromagnétique selon la figure 22.
[Fig 25] la figure 25 est une vue de face selon l'axe Z du transducteur électromagnétique selon la figure 22.

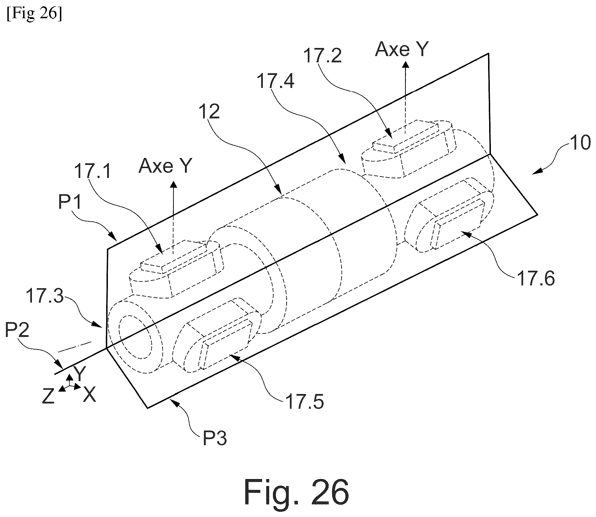

[Fig 26] la figure 26 reprend le transducteur électromagnétique selon la figure 22, en montrant les lignes et plans de mesures.

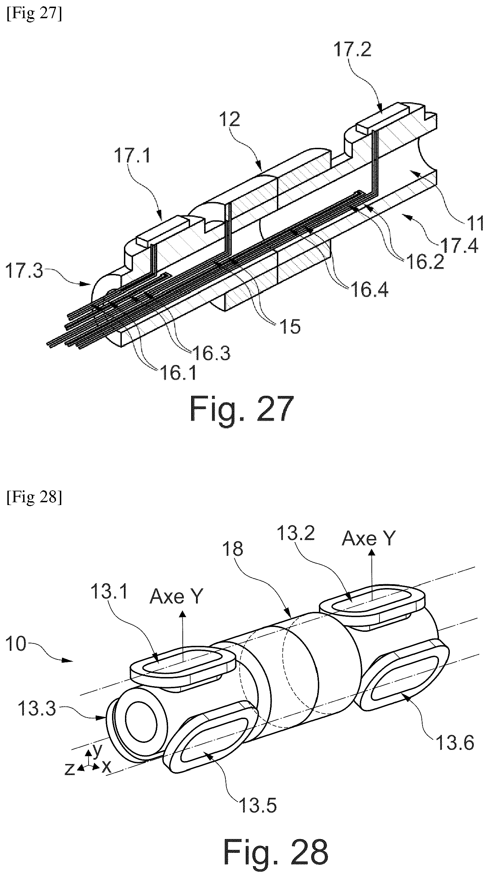

[Fig 27] la figure 27 est une vue schématique en perspective et en coupe longitudinale d'un transducteur électromagnétique selon la figure 22 montrant l'agencement des fils de raccordement électriques aux bobines primaire et secondaires.
[Fig 28] la figure 28 est une vue schématique en perspective d'un transducteur électromagnétique selon une alternative de l'invention à fonctionnement à courant continu, à aimant permanent et à bobines réceptrices.

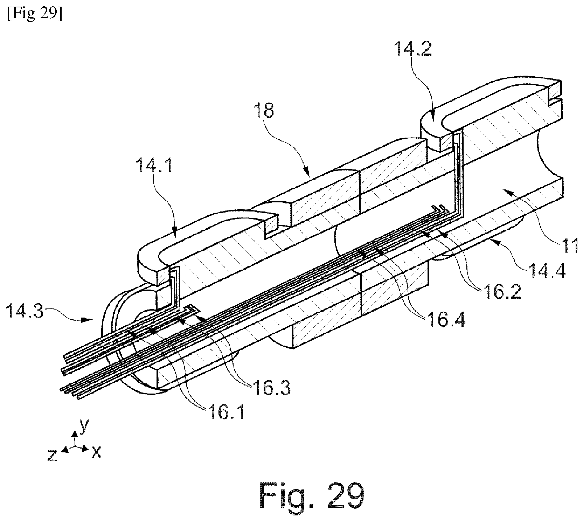

[Fig 29] la figure 29 est une vue schématique en perspective et en coupe longitudinale d'un transducteur électromagnétique selon la figure 28 montrant l'agencement des fils de raccordement électriques aux bobines primaire et secondaires.

### Description détaillée

Dans l'ensemble de la présente demande, les termes « amont » et « aval » sont à comprendre par référence au sens de l'écoulement d'un fluide autour du transducteur suivant l'axe Z.

Dans l'ensemble de la demande, un transducteur électromagnétique selon l'invention est défini dans une position par rapport à un repère orthogonal XYZ constituant un trièdre, comprenant trois axes perpendiculaires deux à deux, à savoir :
- un axe X, définissant une direction transversale,
- un axe Y, définissant une direction transversale, qui avec l'axe X définit un plan XY,
- un axe Z, définissant une direction longitudinale, perpendiculaire au plan XY, et définissant la direction générale selon laquelle le transducteur s'étend et l'axe de révolution de la bobine primaire.

Par convention, pour la suite, l'axe Y est celui normal à la face supérieure de deux bossages d'une même ligne de mesure L1. Une ligne de mesure est définie comme étant la droite imaginaire parallèle à l'axe Z et passant par le centre des faces supérieures de deux bossages de même normale.

Les indices i utilisés pour définir géométriquement les bossages et les bobines du transducteur sont ceux utilisés pour les couplages électromagnétiques et le traitement des signaux, comme expliqué ci-après.

Les bossages et bobines agencés sur une même portion d'extrémité du noyau du transducteur sont tous, soit de même indice impair ou pair. Dans les simulations, ci-après, la portion extrémité amont du noyau supporte les bobines d'indice impair.

Les tensions produites par les six bobines réceptrices sont respectivement notées e1, e2, e3, e4, e5, e6.

Les figures 1 à 12A ont déjà été décrites en préambule. Elles ne seront donc pas détaillées par la suite.

On a représenté en figures 13 à 16, un transducteur électromagnétique 10 selon l'invention, destiné à mesurer les trois composantes de vitesse d'un écoulement d'un fluide électriquement conducteur.

Ce transducteur 10 comprend tout d'abord un tube cylindrique métallique 11 formant un noyau électromagnétique, qui s'étend selon un axe central Z, comprenant une portion centrale 110 et deux portions d'extrémité 111, 112, de part et d'autre de la portion centrale. De préférence, la longueur de la portion centrale 110 est égale à celle de chacune des deux portions d'extrémité 111, 112.

La portion d'extrémité amont 111 comprend trois bossages 13.1, 13.3, 13.5 agencés à 120 ° les uns des autres autour de l'axe central (Z) et délimitant chacun une surface plane, parallèle à l'axe central (Z).

La portion d'extrémité aval 112 comprend trois bossages 13.2, 13.4, 13.6 agencés à 120 ° les uns des autres autour de l'axe central (Z) et délimitant chacun une surface plane, parallèle à l'axe central (Z).

De préférence, tous les bossages sont de dimensions et de formes identiques.

Avantageusement, chaque bossage a une forme de T en vue de face, orthogonale à l'axe central (Z), la tête du T étant la surface plane.

Une bobine électrique primaire 12 est enroulée autour de la portion centrale 110 du tube 11.

Six bobines électriques réceptrices 14.1, 14.2, 14.3, 14.4, 14.5, 14.6 sont enroulées chacune respectivement autour d'une des surfaces planes des bossages 13.1, 13.2, 13.3, 13.4, 13.5, 13.6.

Le fonctionnement du transducteur électromagnétique 10 est expliqué maintenant en relation aux simulations effectuées par les inventeurs.

Comme défini précédemment, le transducteur 10 présente trois lignes de mesures : L1, L2, L3.

La bobine primaire 12 est alimentée en courant alternatif.

Ce courant entraîne la création d'un champ magnétique externe B qui présente trois plans de symétrie P1, P2, P3 se coupant sur l'axe Z. Chacun de ces plans passe par une des lignes de mesure L1, L2, L3. Le plan de mesure P1 est relatif au couple de bobines 14.1 et 14.2. Le plan de mesure P2 est relatif au couple de bobines 14.3 et 14.4. Le plan de mesure P3 est relatif au couple de bobines 14.5 et 14.6.

De manière simplifiée, on considère les couplages magnétiques qui existent entre la bobine primaire 12 et respectivement le couple de bobines 14.1 et 14.2 du plan de mesure P1, le couple de bobines 14.3 et 14.4 du plan de mesure P2 et le couple de bobines 14.5 et 14.6. du plan de mesure P3.

Comme on peut le voir sur les figures 17 et 17A, il existe un champ *Bᵢ* qui ne modifie ni la symétrie de *B* ni le couplage entre la bobine primaire 12 et les bobines réceptrices ou secondaires.

Un fluide à écoulement tridimensionnel environnant le transducteur 10 va modifier le couplage de champ magnétique entre la bobine primaire 12 et les six bobines secondaires 14.1, 14.2, 14.3, 14.4, 14.5, 14.6, du fait qu'il provoque la création d'un champ *Bᵤ.* Cette distorsion est mesurable grâce aux tensions induites présentes sur les bobines réceptrices.

Un mouvement de fluide conducteur de l'électricité autour du transducteur 10 ayant uniquement une composante de vitesse positive suivant l'axe Z, modifie de la même manière les couplages des paires de bobines dans chacun des trois plans de mesure P1, P2, P3. Autrement dit, les bobines réceptrices 14.1, 14.3, 14.5 ont une tension induite à leurs bornes qui augmente de *Δe* alors que dans le même temps les bobines 14.2, 14.4, 14.6 présentent une tension induite à leurs bornes qui diminue de *Δe*. Cette distorsion de flux sous l'action d'un écoulement de vitesse selon l'axe Z est montrée à la figure 18.

Un traitement de signal du même type que celui appliqué aux bobines d'un DDF selon l'état de l'art 1, comme expliqué en préambule est applicable aux paires de bobines 14.1, 14.2 et 14.3, 14.4 et 14.5, 14.6 pour mesurer la composante de vitesse z. Ainsi les différences de tension e₁ - e₂ = e₃ - e₄ = e₅ - e₆ entre les bobines sont des fonctions linéaires de Z.

Il est possible de faire la somme de ces différences de tension (e₁ - e₂) + (e₃ - e₄) + (e₅ - e₆) pour augmenter la sensibilité du transducteur 10 à la mesure d'une composante de vitesse selon Z.

Un écoulement représenté par un vecteur vitesse contenu dans n'importe quel plan passant par l'axe Z et n'ayant pas qu'une unique composante sur cet axe, va distordre le couplage entre la bobine primaire 12 et respectivement chacune des bobines des groupes dans les portions d'extrémité, à savoir le groupe des bobines 14.1, 14.2, 14.3 et le groupe des bobines 14.4, 14.5, 14.6.

Les figures 19, 19A, 19B illustrent ainsi une distorsion de flux sous l'action d'un écoulement de vitesse selon l'axe X.

La figure 20 illustre quant à elle la distorsion de flux sous l'action d'un écoulement de vitesse selon l'axe Y.

Ainsi, une vitesse d'écoulement quelconque, à composantes tridimensionnelles, peut être caractérisée par un transducteur 10 selon l'invention.

De manière générale, on peut définir une relation matricielle pour traduire les tensions produites par les six bobines réceptrices 14.1 à 14.6, e₁, e₂, e₃, e₄, e₅, e₆, en composantes tridimensionnelles (Ux, Uy, Uz) du vecteur vitesse local U.

Cette matrice s'exprime ainsi : $\left[\begin{matrix}Ux \\ Uy \\ Uz\end{matrix}\right] = \left[\begin{matrix}T 11 & T 12 & T 13 & T 14 & T 15 & T 16 \\ T 21 & T 22 & T 23 & T 24 & T 25 & T 26 \\ T 31 & T 32 & T 33 & T 34 & T 35 & T 36\end{matrix}\right] ⋅ \left[\begin{matrix}e 1 \\ e 2 \\ e 3 \\ e 4 \\ e 5 \\ e 6\end{matrix}\right]$

Ainsi : ${U}_{x} = {T}_{11} . {e}_{1} + {T}_{12} . {e}_{2} + {T}_{13} . {e}_{3} + {T}_{14} . {e}_{4} + {T}_{15} . {e}_{5} + {T}_{16} . {e}_{6}$ ${U}_{y} = {T}_{21} . {e}_{1} + {T}_{22} . {e}_{2} + {T}_{23} . {e}_{3} + {T}_{24} . {e}_{4} + {T}_{25} . {e}_{5} + {T}_{26} . {e}_{6}$ ${U}_{z} = {T}_{31} . {e}_{1} + {T}_{32} . {e}_{2} + {T}_{33} . {e}_{3} + {T}_{34} . {e}_{4} + {T}_{35} . {e}_{5} + {T}_{36} . {e}_{6}$

Tᵢⱼ définit la contribution de eⱼ dans la réponse du transducteur vis-à-vis d'une vitesse d'écoulement présente dans le plan de mesure i et donc, dans l'expression de la composante de vitesse *Uₓ.*

Tᵢⱼ dépend des caractéristiques des matériaux du transducteur, au premier ordre la matière constituant le noyau 11, la géométrie des bossages 13.1 à 13.6 et les caractéristiques des bobines réceptrices, dont le nombre de spires de chacune d'entre elles.

Tᵢⱼ traduit aussi les propriétés du fluide électriquement conducteur et aussi l'influence qu'exerce la température sur les matériaux en présence.

Enfin, Tᵢⱼ est aussi fonction de l'excitation apportée au transducteur : nature et intensité de l'excitation magnétique produite par la bobine primaire.

On peut exprimer, Tᵢⱼ = kₜ. kₑ.Kᵢⱼ
avec
kt : facteur d'influence lié à la température sur les différents matériaux en présence
kₑ : facteur d'influence lié à l'excitation
Kᵢⱼ : traduit l'influence de la constitution du transducteur.

Ainsi on peut exprimer la matrice de composantes tridimensionnelles (Ux, Uy, Uz) du vecteur vitesse local U comme suit : $\left[\begin{matrix}Ux \\ Uy \\ Uz\end{matrix}\right] = {k}_{t .} {k}_{e .} \left[\begin{matrix}K 11 & K 12 & K 13 & K 14 & K 15 & K 16 \\ K 21 & K 22 & K 23 & K 24 & K 25 & K 26 \\ K 31 & K 32 & K 33 & K 34 & K 35 & K 36\end{matrix}\right] ⋅ \left[\begin{matrix}e 1 \\ e 2 \\ e 3 \\ e 4 \\ e 5 \\ e 6\end{matrix}\right]$

Usuellement, les caractéristiques d'un DDF selon l'état de l'art, comme décrit en préambule sont établies par le biais de résultats de simulations numériques ou par expérimentation.

On peut se référer à la publication [7] qui expose une méthode de calibration d'un DDF externe, en imposant un débit volumique Q connu d'un métal liquide, dans le tube d'implantation autour duquel est positionné le DDF. Alors que le débit Q est imposé, les tensions *S₁* et *S₂* produites par les bobines secondaires 4 et 5 sont mesurées et exploitées de telle sorte que la réponse *A* du DDF soit définie par : $A = {A}_{1} / {A}_{2}$ Avec ${A}_{1} = {S}_{1} - {S}_{2}$ ${A}_{2} = {S}_{1} + {S}_{2}$

On relie la réponse *A* au débit volumique Q par *A* = T. *Q*

Le coefficient T traduit les caractéristiques dimensionnelles et de matériaux du DDF, ainsi que du tube d'implantation, du métal liquide ainsi que la dépendance de la réponse à la température et à l'excitation électrique. Il y a une valeur de T pour une valeur de température associée à une excitation électrique, qui est définie par son amplitude et sa fréquence.

Le champ des vitesses dans le tube d'implantation produisant le débit Q mesuré par le DDF selon l'état de l'art contient des vitesses parallèles à l'axe central du DDF. La calibration est monodimensionnelle. La série des coefficients T est déterminée par des essais paramétriques en température et excitation donnés.

Pour le transducteur électromagnétique 10 qui vient d'être décrit, on peut procéder à l'instar de la calibration de [7] mais en imposant un champ de vitesses tridimensionnel.

Lors d'essais à température et excitation fixées, différents champs de vitesses seront successivement imposés avec des composantes dans une ou plusieurs directions : Ux, Uy, Uz.

Lors de chaque essai, les tensions e₁, e₂, e₃, e₄, e₅, e₆, des bobines 14.1 à 14.6, peuvent être relevées. On réalise autant d'essais qu'il y a de termes Kᵢⱼ de la matrice K à déterminer. De la sorte, un système linéaire d'équations pourra être établi et résolu de manière à calculer chacun des termes Kᵢⱼ de la matrice de composantes tridimensionnelles (Ux, Uy, Uz).

Les essais seront paramétrés en température et en excitation de manière à pouvoir également déterminer l'influence des termes pondérateurs kₜ et kₑ.

Pour l'alimentation électrique de la bobine primaire 12 et la récupération des courants dans les bobines réceptrices 14.1 à 14.6, on peut faire passer les différents fils de raccordement nécessaires à l'intérieur du noyau cylindrique 11.

Un exemple d'intégration de ces fils est montré à la figure 21 : les fils électriques 15 sont reliés à la bobine primaire 12, et les fils électriques 16.1, 16.2, 16.3, 16.4 sont reliés respectivement aux bobines réceptrices 14.1, 14.2, 14.3, 14.4.

Comme illustré aux figures 22 à 27, en lieu et place des bobines 14.1, 14.2, 14.3, 14.4, 14.5, 14.6, on peut prévoir des capteurs à effet Hall 17.1, 17.2, 17.3, 17.4, 17.5, 17.6 avec le même noyau 11 que décrit précédemment pour réaliser également un transducteur électromagnétique 10 fonctionnant à courant alternatif. Dans ce mode, un capteur à effet Hall 17.1 à 17.6 est fixé directement sur la surface plane délimitée par un bossage 13.1 à 13.6. Les fils de raccordement 15, 16.1 à 16.6 peuvent être implantés comme dans le mode précédent.

Comme illustré aux figures 28 et 29, en lieu et place d'une bobine primaire 12, on peut prévoir un aimant permanent 18 avec le même noyau 11 que décrit précédemment pour réaliser également un transducteur électromagnétique 10 fonctionnant à courant continu.

D'autres variantes et améliorations peuvent être envisagées sans pour autant sortir du cadre de l'invention.

### Liste des références citées

[1] : https://www.hzdr.de/db/Cms?pOid=55433&pNid=226
[2]: https://ieeexplore.ieee.org/stamp/stamp.jsp?arnumber=9768530
[3]: https://www.degruyter.com/document/doi/10.1515/HTMP.2000.19.3-4.187/pdf
[4]:https://esfr-smart.eu/wp-content/uploads/2021/04/S35_1_Sven_Eckert_ESFR_SMART_Measuring_Techniques.pd f
[5]:https://link.springer.com/content/pdf/10.1007/978-1-4020-4833-3_17.pdf?pdf=inline%20link
[6]: https://iopscience.iop.org/article/10.1088/1757-899X/228/1/012023/pdf
[7]: https://iopscience.iop.org/article/10.1088/1757-899X/208/1/012031/pdf

## Revendications

1. Transducteur électromagnétique (10), destiné à mesurer les composantes tridimensionnelles de vitesse d'un écoulement d'un fluide électriquement conducteur, comprenant : :
- un tube cylindrique métallique (11) formant un noyau à haute perméabilité magnétique, qui s'étend selon un axe central (Z), comprenant une portion centrale et deux portions d'extrémité, de part et d'autre de la portion centrale, comprenant chacune un nombre de trois bossages (13.1 à 13.6), agencés à 120 ° les uns des autres autour de l'axe central (Z) et délimitant chacun une surface plane, parallèle à l'axe central (Z),
- une bobine électrique (12), dite bobine primaire, enroulée autour de la portion centrale du tube,
- un nombre de six bobines électriques (14.1 à 14.6), dite bobines réceptrices, enroulées chacune autour d'une des surfaces planes, ou de six capteurs à effet hall, agencés chacun sur une des surfaces planes.

2. Transducteur électromagnétique (10), destiné à mesurer les composantes tridimensionnelles de vitesse d'un écoulement d'un fluide électriquement conducteur, comprenant :
- un tube cylindrique métallique (11) formant un noyau à haute perméabilité magnétique, qui s'étend selon un axe central (Z), comprenant une portion centrale et deux portions d'extrémité, de part et d'autre de la portion centrale, comprenant chacune un nombre de trois bossages (13.1 à 13.6), agencés à 120 ° les uns des autres autour de l'axe central (Z) et délimitant chacun une surface plane, parallèle à l'axe central (Z),
- un aimant permanent (18) agencé autour de la portion centrale du tube,
- un nombre de six bobines électriques (14.1 à 14.6), dite bobines réceptrices, enroulées chacune autour d'une des surfaces planes, ou de six capteurs à effet hall, agencés chacun sur une des surfaces planes.

3. Transducteur électromagnétique (10) selon l'une des revendications précédentes, chaque bossage ayant une forme de T en vue de face, orthogonale à l'axe central (Z), la tête du T étant la surface plane.

4. Utilisation d'un transducteur électromagnétique selon l'une des revendications précédentes, pour la mesure des composantes tridimensionnelles de vitesse d'un écoulement d'un fluide électriquement conducteur, tel qu'un métal liquide de réacteur nucléaire.

## Patentansprüche

1. Elektromagnetischer Wandler (10) zur Messung der dreidimensionalen Geschwindigkeitskomponenten eines elektrisch leitenden Fluidstroms, der Folgendes aufweist:
- ein zylindrisches Metallrohr (11), das einen Kern mit hoher magnetischer Permeabilität bildet und sich entlang einer Mittelachse (Z) erstreckt und einen Mittelabschnitt und zwei Endabschnitte auf beiden Seiten des Mittelabschnitts aufweist, die jeweils drei Erhebungen (13.1 bis 13.6) aufweisen, die im Winkel von 120° zueinander um die Mittelachse (Z) angeordnet sind und jeweils eine ebene Fläche begrenzen, die parallel zur Mittelachse (Z) verläuft,
- eine elektrische Spule (12), die als Primärspule bezeichnet wird und um den Mittelabschnitt des Rohrs gewickelt ist,
- sechs elektrische Spulen (14.1 bis 14.6), die als Empfängerspulen bezeichnet werden und jeweils um eine der ebenen Flächen gewickelt sind, oder sechs Hall-Sensoren, die jeweils auf einer der ebenen Flächen angeordnet sind.

2. Elektromagnetischer Wandler (10) zur Messung der dreidimensionalen Geschwindigkeitskomponenten eines elektrisch leitenden Fluidstroms, der Folgendes aufweist:
- ein zylindrisches Metallrohr (11), das einen Kern mit hoher magnetischer Permeabilität bildet und sich entlang einer Mittelachse (Z) erstreckt und einen Mittelabschnitt und zwei Endabschnitte auf beiden Seiten des Mittelabschnitts aufweist, die jeweils drei Erhebungen (13.1 bis 13.6) aufweisen, die im Winkel von 120° zueinander um die Mittelachse (Z) angeordnet sind und jeweils eine ebene Fläche begrenzen, die parallel zur Mittelachse (Z) verläuft,
- einen Permanentmagneten (18), der um den Mittelabschnitt des Rohrs herum angeordnet ist,
- sechs elektrische Spulen (14.1 bis 14.6), die als Empfängerspulen bezeichnet werden und jeweils um eine der ebenen Flächen gewickelt sind, oder sechs Hall-Sensoren, die jeweils auf einer der ebenen Flächen angeordnet sind.

3. Elektromagnetischer Wandler (10) nach einem der vorhergehenden Ansprüche, wobei jede Erhebung in der Draufsicht eine T-Form aufweist, die senkrecht zur Mittelachse (Z) steht, wobei der Kopf des T die ebene Fläche bildet.

4. Verwendung eines elektromagnetischer Wandlers nach einem der vorhergehenden Ansprüche zur Messung der dreidimensionalen Geschwindigkeitskomponenten eines elektrisch leitenden Fluidstroms, wie beispielsweise eines flüssigen Metalls in einem Kernreaktor.

## Claims

1. Electromagnetic transducer (10), for measuring the three-dimensional velocity components of a flow of an electrically conductive fluid, comprising:
- a cylindrical metal tube (11) forming a core with high magnetic permeability, which extends along a central axis (Z), comprising a central portion and two end portions, on either side of the central portion, each comprising a number of three bosses (13.1 to 13.6), arranged 120° from one another about the central axis (Z) and each delimiting a flat surface, parallel to the central axis (Z),
- an electrical coil (12), referred to as the primary coil, wound around the central portion of the tube,
- a number of six electrical coils (14.1 to 14.6), called receiver coils, each wound around one of the planar surfaces, or six hall effect sensors, each arranged on one of the planar surfaces.

2. Electromagnetic transducer (10), for measuring the three-dimensional velocity components of a flow of an electrically conductive fluid, comprising:
- a cylindrical metal tube (11) forming a core with high magnetic permeability, which extends along a central axis (Z), comprising a central portion and two end portions, on either side of the central portion, each comprising a number of three bosses (13.1 to 13.6), arranged 120° from one another about the central axis (Z) and each delimiting a flat surface, parallel to the central axis (Z),
- a permanent magnet (18) arranged around the central portion of the tube,
- a number of six electrical coils (14.1 to 14.6), called receiver coils, each wound around one of the planar surfaces, or six hall effect sensors, each arranged on one of the planar surfaces.

3. Electromagnetic transducer (10) according to one of the preceding claims, each boss being T-shaped in front view, orthogonal to the central axis (Z), the head of the T being the planar surface.

4. Use of an electromagnetic transducer according to one of the preceding claims, for measuring the three-dimensional velocity components of a flow of an electrically conductive fluid, such as a liquid metal of a nuclear reactor.
